Europäisches Patentamt

European Patent Office

Office européen des brevets

(11) Numéro de publication: **0 537 129 B1**

# FASCICULE DE BREVET EUROPEEN

(45) Date de publication du fascicule du brevet: **08.11.95** (51) Int. Cl.⁶: **C04B 16/06**, D06M 13/292

(21) Numéro de dépôt: **92870115.0**

(22) Date de dépôt: **03.08.92**

(54) **Produits manufacturés solides façonnés renforcés par des fibres.**

(30) Priorité: **01.10.91 JP 282268/91**

(43) Date de publication de la demande:
**14.04.93 Bulletin 93/15**

(45) Mention de la délivrance du brevet:
**08.11.95 Bulletin 95/45**

(84) Etats contractants désignés:
**AT BE CH DE DK ES FR GB GR IE IT LI NL PT**

(56) Documents cités:
**EP-A- 0 081 265**
**EP-A- 0 225 036**
**EP-A- 0 343 148**
**FR-A- 2 448 516**

**CHEMICAL ABSTRACTS, vol. 94, 1981, Columbus, Ohio, US; abstract no. 51914z, J. BALSLEV ET AL "polypropylene fibers for reinforcing construction material" & BR-A-7807232**

(73) Titulaire: **POLYFIBRE S.A.**
**Chemin des Plantaz 36,**
**P.O. Box 73**
**CH-1260 Nyon (CH)**

(72) Inventeur: **de Lhoneux, Benoît**
**avenue de la Vecquée, 17**
**B-5000 Namur (BE)**
Inventeur: **Studinka, Josef**
**Dolderstrasse 92**
**CH-8030 Zürich (CH)**
Inventeur: **Takai, Yosuke, Harima Kenkyujo**
**Daiwabo Create Co. Ltd.,**
**877 Komiya**
**Harima Cho,**
**Kako-Gun,**
**Hyogo Prefecture (JP)**

(74) Mandataire: **Bairiot-Delcoux, Mariette et al**
**Office Kirkpatrick S.A.,**
**Avenue Wolfers, 32**
**B-1310 La Hulpe (BE)**

Rank Xerox (UK) Business Services
(3. 10/3.0 9/3.3.3)

## Description

La présente invention concerne un nouveau mélange de matériaux de construction destiné à la fabrication de produits manufacturés solides façonnés renforcés par des fibres, un procédé de fabrication de ces produits manufacturés façonnés et les produits manufacturés façonnés solides fabriqués à l'aide de ce nouveau mélange de matériaux de construction.

Il est généralement connu que les produits manufacturés façonnés des façons les plus diverses, comme les ardoises, feuilles de parement planes ou feuilles de toiture ondulées, pannes, tubes et autres produits façonnés peuvent être fabriqués au départ de suspensions aqueuses de mélanges comprenant des liants hydrauliques, des charges et des fibres de renforcement.

Parmi les matériaux de construction traditionnels, les produits manufacturés en ciment renforcé par des fibres, fabriqués au départ d'amiante et de ciment sont déjà connus depuis des décennies. Dans l'industrie de l'amiante-ciment, les procédés basés sur la technique par enroulement de L. Hatschek (brevet autrichien n° 5 970) constituent toujours les techniques les plus répandues pour la fabrication d'éléments de construction. La technologie de ce procédé de fabrication est décrite exhaustivement, par exemple, dans l'ouvrage de Harald Klos intitulé Asbestzement (Asbeste-ciment) Springer Verlag, 1967. D'autres procédés applicables sont, par exemple, les procédés Magnani, Mazza, Flow-on, d'extrusion et d'injection.

Le procédé Hatschek pour la fabrication, par exemple, de feuilles en amiante-ciment est basé sur l'utilisation de machines d'égouttage à tamis cylindrique. Dans ce procédé, un mat provenant d'une suspension diluée d'amiante et de ciment contenue dans un cuvier est transféré à un feutre, par l'intermédiaire d'un égouttoir cylindrique, et est ensuite enroulé jusqu'à l'épaisseur requise à l'aide de cylindres de formage. Pour la fabrication de feuilles ondulées, la feuille d'amianteciment formée sur le cylindre de formage est tranchée et détachée de ce cylindre après que l'épaisseur souhaitée a été atteinte. Cette feuille est ensuite façonnée et mise à durcir entre des formes en métal ondulé huilé.

L'amiante présente tant des propriétés de renforcement dues à sa résistance à la traction propre que des qualités de mise en oeuvre en relation avec l'excellente aptitude à la dispersion dans une suspension aqueuse de ciment. Pendant le stade d'égouttage, en raison des bonnes propriétés de filtration et de la bonne affinité pour le ciment, les fibres d'amiante peuvent retenir les fines particules en suspension du mélange composite en cours de façonnage. Dans le produit final hydraté, la haute résistance en traction combinée avec le module d'élasticité élevé et le faible allongement à la rupture contribuent à conférer aux produits manufacturés en amiante-ciment leur haute résistance en flexion connue.

Toutefois, dans les quelques dernières années, l'amiante est devenu un composant indésirable pour des raisons tenant à l'environnement et à la santé et des efforts importants ont été consacrés à des tentatives de le remplacer.

Au cours des dernières années, une activité de recherche intensive a été consacrée à la découverte de fibres de substitution qui puissent remplacer partiellement ou totalement l'amiante dans les procédés actuels de fabrication basés sur des techniques d'égouttage.

Il est dès lors souhaitable d'utiliser de nouvelles fibres comme agents de renforcement et aussi comme auxiliaires de mise en oeuvre à utiliser avec les liants hydrauliques, par exemple pour le renforcement du ciment. Ces fibres doivent être à même de conférer aux produits manufacturés les contenant les propriétés mécaniques souhaitées, qui étaient obtenues antérieurement au moyen de l'amiante.

Les critères auxquels doivent satisfaire les fibres qui conviennent pour le renforcement du ciment et des autres liants à prise hydraulique sont exceptionnellement élevés.

Les propriétés suivantes caractérisent l'amiante tant comme fibre de renforcement que comme fibre de mise en oeuvre dans la technologie de l'égouttage :

1) en ce qui concerne les propriétés de mise en oeuvre :
- haute surface spécifique,
- bonne aptitude à la dispersion,
- résistance chimique et durabilité excellentes,
- haute capacité de rétention du ciment,
- bonne aptitude à la formation de couches,
2) en ce qui concerne les qualités de renforcement :
- haute résistance à la traction,
- haut module d'élasticité,
- faible allongement à la rupture.

Pour ce qui est des critères chimiques, la résistance aux alcalis dans les solutions saturées d'hydroxyde de calcium à température élevée est en particulier une nécessité absolue.

On n'a découvert aucune fibre naturelle ou synthétique manifestant la combinaison de toutes les propriétés des fibres d'amiante. Il est à présent connu que le remplacement de l'amiante nécessite deux types différents de fibres correspondant aux deux fonctions principales de l'amiante (voir, par exemple, DE 3 002 484). Les propriétés de filtration de l'amiante peuvent être reproduites par addition de pulpes naturelles ou synthétiques, par exemple de cellulose seule et/ou de fibrides synthétiques. Des fibres de renforcement sélectionnées sont utilisées pour le renforcement du produit manufacturé composite. Celles-ci peuvent être des fibres organiques ou inorganiques à module élevé qui sont habituellement coupées à des longueurs de 1 à 15 mm.

De nombreuses fibres synthétiques ont été essayées pour le renforcement du ciment, mais la plupart ont donné des résultats médiocres ou insatisfaisants pour un certain nombre de raisons telles qu'une résistance chimique insuffisante, une médiocre affinité pour le ciment, une insuffisance des propriétés mécaniques, en particulier une ténacité intrinsèque et un module élastique insuffisants, et un allongement exagéré à la rupture. Le prix élevé est très souvent un facteur limitatif pour les applications industrielles.

De surcroît, les caractéristiques physiques des fibres doivent être compatibles en ce qui concerne les propriétés importantes, avec les propriétés des liants hydrauliques. Dans le cas du ciment, on sait que ce matériau a une certaine fragilité et peut, par exemple, se rompre à un allongement d'environ 0,03%. Dans l'état connu de la technique, une fibre de renforcement doit avoir un module initial plus élevé que le module élastique du liant hydraulique.

Outre les propriétés physiques précitées des fibres, il est de même important que les fibres puissent être dispersées aisément dans une suspension aqueuse diluée de ciment et restent aussi dispersées uniformément lors de l'apport d'autres additifs lorsque ces fibres doivent être mises en oeuvre par des techniques d'égouttage pour donner des produits en fibres-ciment.

La littérature contient déjà d'innombrables publications à propos de l'utilisation de diverses fibres organiques et inorganiques naturelles ou synthétiques. Les fibres faites de coton, de cellulose, de polyamide, de polyester, de polyacrylonitrile, de polypropylène et de poly(alcool vinylique), entre autres, ont déjà fait l'objet d'investigations pour le renforcement du ciment. De même, on connaît des travaux sur des fibres faites de verre, d'acier, d'aramide et de carbone. Parmi toutes ces fibres, aucune n'a jusqu'à présent toutes les propriétés requises, spécialement pour le ciment.

Par exemple, le verre a une faible stabilité chimique, l'acier manifeste de la corrosion et a une densité trop élevée, le carbone est trop cassant, adhère mal et est de prix élevé, la cellulose a une durabilité insuffisante, et le polyéthylène et le polypropylène ordinaire ont une résistance en traction insuffisante.

A ce jour, il existe principalement deux types de fibres synthétiques qui satisfont aux critères pour le renforcement du ciment. Toutes deux sont des fibres à module élevé à base de poly(alcool vinylique) (ou PVA) et de polyacrylonitrile (ou PAN) isolément (GB 2 850 298) ou en combinaison. Le premier est disponible, par exemple, sous la marque Kuralon® de la Société Kuraray, Japon (DE 2 850 337) et un exemple du second est le Dolanit® fabriqué par Hoechst, Allemagne.

Ces fibres se caractérisent par une ténacité élevée et un faible allongement à la rupture illustrés ci-après.

|  | PVA | PAN |
|---|---|---|
| Ténacité, $N/mm^2$ | 1550 | 910 |
| Module initial $N/mm^2$ | 37000 | 17000 |
| Allongement à la rupture (%) | 7,4 | 9,0 |

Dans le domaine des produits en fibres-ciment, il est connu que la résistance mécanique est la plus faible lorsque les produits manufacturés composites se trouvent à l'état humide (situation courante par exposition dans l'environnement) et dès lors, les normes internationales requièrent souvent que les mesures soient effectuées dans des conditions de saturation par l'eau. De surcroît, l'énergie de rupture est aussi une propriété fort importante parce qu'elle donne une indication de la ténacité sous impact du produit manufacturé.

Les fibres de PVA ayant les meilleures propriétés mécaniques non seulement confèrent la plus haute résistance en flexion à l'état humide, mais de plus une énergie de rupture qui est beaucoup plus élevée que dans le cas des fibres de PAN. L'énergie de rupture est définie comme étant l'aire sous la courbe contrainte-déformation jusqu'au point auquel le maximum de flexion est atteint, c'est-à-dire où le produit manufacturé composite est rompu.

L'inadéquation des fibres de PVA tient à leur sensibilité à l'eau à haute température et à leur prix élevé. Les produits manufacturés façonnés renforcés par les fibres de PVA ont d'excellentes propriétés mécaniques à l'état sec, mais la valeur élevée de la résistance en flexion diminue à l'état humide.

Connaissant la corrélation entre les propriétés des fibres et celles des produits manufacturés résultants, il est relativement simple de fabriquer des produits manufacturés en fibres-ciment auxquels des normes sévères sont imposées en ce qui concerne la résistance en flexion, la ténacité sous impact et l'énergie de rupture en utilisant exclusivement le PVA comme fibres de renforcement. Les fibres de PVA sont en fait fort onéreuses (au moins 50% de plus que les fibres de PAN moins efficaces). Une solution brevetée proposée a été d'utiliser des mélanges de PVA et de PAN donnant de meilleurs résultats que ceux prévus d'après la loi des mélanges (EP 0 155 520).

Bien que cette solution soit intéressante du point de vue économique, l'énergie de rupture reste encore à la valeur inférieure.

Le but de la présente invention est de procurer des produits manufacturés façonnés solides renforcés par des fibres qui évitent les inconvénients propres à l'état connu, par exemple la faible énergie de rupture à l'état humide et le prix élevé.

Sur la base de la règle des mélanges pour la résistance d'un produit manufacturé composite comprenant des fibres dans une matrice, seules des fibres à module élevé et ténacité élevée ont été utilisées jusqu'à présent pour la fabrication des produits manufacturés en fibres-ciment à haute résistance en flexion.

Une matrice de ciment pur a un module E de 15 000 N par mm$^2$. Par conséquent, suivant la règle des mélanges pour un produit manufacturé mixte en fibres-ciment, il faut admettre que le module E des fibres de renforcement doit être supérieur à 15 000 N par mm$^2$. Cette hypothèse théorique a aussi été confirmée jusqu'à présent par l'expérience pratique.

Dans cette perspective, il a toujours été affirmé qu'en général les fibres de polypropylène sont techniquement médiocres lorsqu'il s'agit de renforcer des matériaux à base de ciment en traction ou flexion directe dans la matrice relativement cassante des ciments et mortiers. En effet, il était tout à fait improbable d'obtenir des résultats comparables à ceux des fibres de poly(alcool vinylique) (PVA) à haut module qui sont à ce jour le meilleur produit de substitution de l'amiante.

Il a été découvert de façon inattendue et surprenante que les fibres de polypropylène stéréorégulier ayant une ténacité comparable à celle des fibres de PAN, spécialement avec un module élastique beaucoup plus faible et un allongement à la rupture plus élevé, donnent des résultats égaux ou supérieurs à ceux des fibres de PVA. La haute valeur de ces résultats est spécialement apparente lorsque les produits manufacturés composites sont soumis aux épreuves dans les conditions les plus défavorables, c'est-à-dire à l'état saturé d'eau.

L'objet de la présente invention est un produit manufacturé façonné solide fabriqué au moyen d'une composition à prise hydraulique comprenant de l'eau, des liants hydrauliques et des fibres de renforcement, et, en outre, des fibres de mise en oeuvre en une quantité de 0 à 10% en poids par rapport au mélange sec total, et des fillers en une quantité de 0 à 50% en poids par rapport au mélange sec total où les fibres de renforcement comprennent 0,1 à 5% en poids par rapport au mélange sec total de fibres de polypropylène hautement cristallin ayant une résistance à la rupture à l'état de fibres de plus de 490 N par mm$^2$ et Q < 5 et 97 < HI < 100 et 94 < IPF < 100, Q étant le rapport du poids moléculaire moyen en masse au poids moléculaire moyen en nombre, HI étant la teneur en constituants insolubles dans le n-heptane à l'ébullition en % en poids et IPF étant la fraction de pentades isotactiques en moles %, c'est-à-dire la fraction molaire des groupes constitués de cinq unités monomères (pentades) enchaînées dans la configuration isotactique. De préférence, les fibres de renforcement comprennent de 0,3 à 4% en poids par rapport au mélange sec total, des fibres de polypropylène hautement cristallin.

Les dites fibres ont contenu initialement 0,05 à 10% en poids d'un agent d'hydrophilisation qui a été rendu pratiquement insoluble à la surface des fibres par réaction avec des ions calcium. De préférence, cet agent d'hydrophilisation est un sel de métal alcalin d'alcoylphosphate comptant 8 à 18 atomes de carbone.

Si la teneur en sel de métal alcalin d'alcoylphosphate est inférieure à 0,05% en poids, la dispersion des fibres est insuffisante, mais si elle excède 10% en poids, son effet n'est pas amélioré. De préférence, on utilise un sel de sodium ou de potassium.

Q est le rapport du poids moléculaire moyen en masse au poids moléculaire moyen en nombre.

Dans la présente demande, Q a été mesuré en utilisant la méthode de chromatographie de perméation sur gel (GPC).

(a) Appareil de mesure : ALC/GPC TYPE 150C, Waters Laboratory Co.

(b) Colonne : TSK-GER GMH6-HT (type haute température).

(c) Solvant : orthodichlorobenzène (ODCB).

4

(d) Température : 115 ° C.

(e) Détecteur : réfractomètre différentiel thermique.

(f) Volume de solvant qui coule : 1 ml par minute.

Dans les conditions ci-dessus, un échantillon du polypropylène hautement cristallin donne les résultats suivants :

| Polymère | Mn | Mw | Q (Mw/Mn) | MFR (g/10 min) |
|---|---|---|---|---|
| Polypropylène hautement cristallin | 40000 | 140000 | 3,5 | 15 |

où

Mw : poids moléculaire moyen en masse

$$Mw = [\Sigma NiMi^2]/[\Sigma NiMi]$$

Mn : poids moléculaire moyen en nombre

$$Mn = [\Sigma NiMi]/[\Sigma Ni]$$

Q : rapport Mw/Mn

MFR : indice de fluidité.

En règle générale, le rapport du poids moléculaire moyen en masse au poids moléculaire moyen en nombre est utilisé comme mesure pour le degré de polydispersité et lorsque cette valeur est supérieure à 1 (monodispersité), la courbe de distribution du poids moléculaire devient plus large. La valeur est plus élevée aussi à mesure que le polymère devient plus ramifié.

HI ou fraction insoluble dans le n-heptane est mesuré en dissolvant complètement un échantillon de 5 g de polypropylène dans 500 ml de xylène à l'ébullition, en versant le mélange dans 5 litres de méthanol pour recueillir le précipité, en séchant celui-ci et en l'extrayant dans le n-heptane à l'ébullition pendant 6 heures suivant la technique de Soxhlet pour obtenir un résidu d'extraction. La valeur de HI est donnée en % en poids par rapport au polymère total.

IPF, ou fraction molaire des groupes constitués de cinq unités monomères (pentades) enchaînées dans la configuration isotactique, est mesuré sur la matière insoluble dans le n-heptane, suivant le procédé proposé dans "Macromolécules", vol. 6, 925 (1973) et vol. 8, 697 (1975).

La densité du polypropylène à l'état de pastille est d'environ 0,905, ce qui n'est pas sensiblement différent de celle du polypropylène ordinaire.

Les fibres de polypropylène hautement cristallin ont de préférence une résistance à la rupture à l'état de fibres de 740 N par mm$^2$ ou davantage et Q ≤ 4,5 et HI ≥ 98 et IPF ≥ 96. Le denier (d) des fibres se situe dans l'intervalle de 0,5 < d < 20.

Les fibres peuvent être coupées en longueur non uniforme de 2 à 15 mm, mais de préférence la longueur des fibres s'échelonne de 5 à 10 mm. La section des fibres peut être circulaire ou de forme irrégulière, par exemple en forme de X ou Y. Les fibres peuvent être crêpées pendant qu'elles sont étirées ou après. La technique de crêpage des fibres peut inclure des opérations telles que la fausse torsion, le traitement d'enchevêtrement par courant d'air (comprenant le traitement TASLAN) ou le traitement par compression (à savoir à la boîte de bourrage).

Les fibres peuvent aussi comprendre des charges, ces charges peuvent être, par exemple, le carbonate de calcium, la silice amorphe, les silicates de calcium naturels et synthétiques et d'autres minéraux.

L'indice de fluidité (MFR) du polypropylène se situe dans la gamme 1 < MFR < 100, de préférence 5 < MFR < 30 et plus avantageusement 10 < MFR < 20. L'indice de fluidité (MFR) est mesuré à 190 ° C par le débit passant au bec (unité : g par 10 minutes, JIS K7210, charge 2,169 kg).

La température de filage à l'état fondu des fibres peut être maintenue relativement basse pour réduire l'enchevêtrement ou le pliement des molécules et cette température se situe de préférence dans l'intervalle de 260 à 280 ° C.

La température d'étirage est de préférence de 140 à 150 ° C pour améliorer autant que possible la performance en traction.

Les fibres de polypropylène sont ajoutées en une quantité de 0,1 à 5% en poids et de préférence de 0,3 à 4% en poids, par rapport au mélange sec total. Lorsque la teneur en fibres est inférieure à 0,1% en poids, l'effet de renforcement n'est pas atteint et lorsqu'elle excède 5% en poids, la résistance en flexion du produit manufacturé composite baisse soudainement.

L'invention est décrite ci-après de façon plus détaillée.

Pour des raisons de simplicité, il est fait référence au ciment comme liant préféré dans la présente description. Toutefois, tous les autres liants à prise hydraulique peuvent être utilisés au lieu du ciment. Les liants à prise hydraulique appropriés sont à entendre comme étant des matériaux qui contiennent un ciment inorganique et/ou un liant ou adhésif inorganique qui durcit par hydratation. Des liants particulièrement appropriés qui durcissent par hydratation sont notamment, par exemple, le ciment Portland, le ciment à haute teneur en alumine, le ciment Portland de fer, le ciment de trass, le ciment de laitier, le plâtre, les silicates de calcium formés par traitement à l'autoclave et les combinaisons de liants particuliers.

Des charges et additifs les plus divers qui, par exemple, peuvent avoir un effet favorable sur la structure des pores d'un bloc de ciment ou qui peuvent, par exemple, améliorer le comportement d'égouttage des suspensions sur les machines d'égouttage sont fréquemment ajoutés aux liants. Des additifs possibles de ce genre sont des matériaux tels que les cendres volantes, la silice amorphe, le quartz moulu, la roche moulue, les argiles, les laitiers de haut-fourneau, les carbonates de pozzolanes, etc.

Le produit manufacturé solide façonné conforme à l'invention peut comprendre de surcroit des fibres inorganiques ou des fibres organiques autres que les fibres de polypropylène.

Lorsque d'autres fibres organiques synthétiques sont utilisées en combinaison avec les fibres de polypropylène, la quantité totale des fibres de renforcement doit se maintenir entre 0,3 et 5% en poids par rapport au mélange sec total. Le rapport de la quantité des autres fibres organiques synthétiques de renforcement à la quantité totale de fibres de renforcement doit se situer entre 0,1 et 0,9. Des exemples de telles fibres sont les fibres de polyacrylonitrile, de poly(alcool vinylique), de polyamide, de polyester, d'aramide, de carbone et de polyoléfines.

En variante, au cas où des fibres inorganiques naturelles ou synthétiques sont utilisées en combinaison avec les fibres de polypropylène, la quantité totale de la combinaison de fibres peut se situer entre 2 et 20% en poids par rapport au mélange sec total. La quantité de fibres de polypropylène utilisée dans de telles combinaisons doit se situer entre 0,3 et 5% en poids par rapport au mélange sec total. Des exemples de fibres inorganiques sont les fibres de verre, la laine de roche, la laine de laitier, les fibres de wollastonite, l'amiante, la sépiolite, les fibres de céramique et analogues.

La fabrication des fibres utilisées suivant l'invention ne fait pas l'objet de la présente demande de brevet. Elle est exécutée, par exemple, suivant un procédé de filage à l'état fondu connu. Ces fibres à haute résistance peuvent être produites, par exemple de la façon suivante.

Fabrication des fibres de polypropylène.

Des pastilles de résine de polypropylène ayant un point de fusion de 165°C avec Q = 3,5, HI = 98, IPF = 97 et un indice de fluidité de 15 g par 10 minutes sont filées à 275°C et les fibres sont étirées à 150°C d'un facteur de 4,5 par un procédé à sec sur cylindre chaud, imprégnées du tensioactif, mises à reposer jusqu'au lendemain et séchées à l'air. Les fibres obtenues ont un denier de 1,9, une résistance à la traction de 770 N par $mm^2$ et un allongement à la rupture de 25%. Les fibres sont coupées avant d'être utilisées dans les mélanges des matériaux de construction. Le tensioactif utilisé est un sel métallique de n-alcoylphosphate comptant 8 à 18 atomes de carbone, comme le laurylphosphate de potassium, le décylphosphate de potassium ou le tridécylphosphate de potassium. La quantité de tensioactif est de 0,5 à 3% du poids des fibres.

EXEMPLES 1 A 9.-

Pour comparer les fibres de polypropylène hautement cristallin à d'autres fibres, on prépare les neuf compositions suivantes.

**TABLEAU I**

| Composition (kg) | 1 | 2 | 3 | 4 | 5 | 6 | 7 | 8 | 9 |
|---|---|---|---|---|---|---|---|---|---|
| PVA 6 mm | 1,8 | — | — | — | — | 0,9 | — | — | — |
| PAN 6 mm | — | 1,8 | — | — | — | — | 0,9 | — | — |
| PVA modifié (1) | — | — | 1,8 | — | — | — | — | 0,9 | — |
| PP standard 6 mm | — | — | — | 1,8 | — | — | — | — | — |
| PP (*) 6 mm | — | — | — | — | 1,8 | 0,9 | 0,9 | 0,9 | — |
| Mélange PP (*)/PVA | — | — | — | — | — | — | — | — | — |
| Mélange PP (*)/PAN | — | — | — | — | — | — | — | — | — |
| Mélange PP (*)/PVA modifié | — | — | — | — | — | — | — | — | — |
| Cellulose 65°SR | 3 | 3 | 3 | 3 | 3 | 3 | 3 | 3 | 3 |
| Charge inerte de CaCO$_3$ | 15 | 15 | 15 | 15 | 15 | 15 | 15 | 15 | 15 |
| Silice amorphe | 6,4 | 6,4 | 6,4 | 6,4 | 6,4 | 6,4 | 6,4 | 6,4 | 6,4 |
| Ciment | 73,8 | 73,8 | 73,8 | 73,8 | 73,8 | 73,8 | 73,8 | 73,8 | 75,6 |
| Total (kg) | 100 | 100 | 100 | 100 | 100 | 100 | 100 | 100 | 100 |

(*) Fibre de polypropylène conforme à l'invention.
(1) Fibre de PVA modifié telle que définie dans EP 363 891.

<u>Préparation des mélanges pour la mise en oeuvre sur machine Hatschek.</u>

On mélange de la pulpe de cellulose Kraft raffinée jusqu'à 65°SR (Shopper-Riegler) avec de la silice amorphe, des charges inertes, du ciment et des fibres synthétiques à une concentration en solides de 200 g par litre de suspension complète.

On dilue cette suspension de fibres et de ciment davantage avec de l'eau jusqu'à une concentration de 30 g par litre et on la transfère ensuite au cuvier d'une machine Hatschek.

Peu avant l'introduction de la suspension dans le cuvier, on ajoute un supplément de 200 ppm d'un agent de floculation de type polyacrylamide pour améliorer la rétention du ciment.

On produit des plaques à l'aide de la machine par 18 tours du cylindre de formage, les plaques étant ensuite pressées entre des moules en acier huilé dans une presse sous une pression spécifique appliquée de 250 bars, jusqu'à une épaisseur moyenne de 6 mm.

On fait durcir les feuilles sous couverture de matière plastique pendant 28 jours dans une humidité relative de 100% à 20°C.

On exécute les essais mécaniques à l'état humide, c'est-à-dire dans les conditions de saturation de l'eau suivant ISO4150.

Les résultats sont donnés au tableau II ci-après.

TABLEAU II

| Composition | Propriétés mécaniques des fibres | | | Propriétés mécaniques des feuilles | | |
|---|---|---|---|---|---|---|
| | Résistance en traction N/mm² | Module initial N/mm² | Allongement à la rupture (%) | MDR N/mm² | IMDR J/m² | IPL 20 J/m² |
| 1 | 1600 | 37000 | 7,4 | 22 | 2600 | 3600 |
| 2 | 950 | 17000 | 9 | 20 | 1400 | 2200 |
| 3 | 830 | 22600 | 11 | 15 | 1100 | 2200 |
| 4 | 280 | 3700 | 150 | 13 | 1170 | 3500 |
| 5 | 770 | 5700 | 25 | 22 | 4300 | 6900 |
| 6 | | | | 22 | 3000 | 3800 |
| 7 | | | | 21 | 2000 | 3500 |
| 8 | | | | 17 | 1800 | 3700 |
| 9 | | | | 12 | 800 | 1200 |

On détermine la résistance en flexion des échantillons sur une machine d'essai mécanique Instron au cours d'un essai classique de flexion sur trois points. L'appareil enregistre la courbe contrainte-déformation à partir de laquelle les résultats sont calculés de la façon suivante :

MDR est le module de rupture exprimé en newtons par mm$^2$ (N par mm$^2$) donné par la formule :

$$MDR = M/W$$

où

M = (charge de rupture de newtons x distance entre les appuis)/4,

W = ([valeur moyenne de l'épaisseur de l'échantillon]$^2$ x dimension de l'échantillon mesurée parallèlement aux appuis)/6.

Le travail de rupture sous charge maximum IMDR exprimé en joules par m$^2$ (J par m$^2$) est l'intégrale de la fonction contrainte-déformation jusqu'à la charge de rupture P.

Le travail de rupture (IPL20) est l'intégrale de la fonction contrainte-déformation, également exprimée en J par m$^2$, jusqu'au point où la charge (ordonnées de la courbe) a diminué jusqu'à 20% de la valeur P maximum atteinte.

Comme on peut le déduire du tableau des épreuves à l'état humide (tableau II), le produit manufacturé conforme à l'invention est plus ductile et a une résistance comparable à celle obtenue avec les meilleures fibres de renforcement actuellement utilisées dans les produits manufacturés en ciment renforcé par des fibres.

EXEMPLES 10 A 13.-

On prépare les compositions suivantes et on les fait durcir sous couverture de matière plastique pendant 28 jours à une humidité relative de 100% et à 20°C, puis on les soumet à une épreuve de vieillissement accéléré consistant en les cycles suivants :

1 - immersion de 72 heures dans l'eau à 20°C,

2 - séchage à l'étuve à 80°C pendant 72 heures.

On répète le traitement ci-dessus huit fois, puis on détermine, dans les conditions de saturation par l'eau, l'énergie de rupture moyenne dans les deux directions par rapport à l'orientation des fibres dans la feuille.

Lorsque l'on utilise les fibres conformes à l'invention, on observe non seulement que l'énergie de rupture est beaucoup plus élevée qu'avec des fibres traditionnelles, mais aussi, après huit cycles de traitement par l'eau et la chaleur, que cette énergie est entièrement conservée alors que les autres fibres ont perdu plus de 50% de leur efficacité.

Les résultats sont donnés au tableau III ci-après.

TABLEAU III

| Composition (kg) | 10 | 11 | 12 | 13 | Energie de rupture (kJ/m$^2$) avec les fibres en question | |
|---|---|---|---|---|---|---|
| | | | | | Après 28 jours | Après 8 cycles |
| PVA | 2 | - | - | - | 5,0 | 2,0 |
| PAN | - | 2 | - | - | 2,5 | 1,0 |
| PVA modifié | - | - | 2 | - | 2,5 | 1,0 |
| PP (*) | - | - | - | 2 | 9,2 | 9,2 |
| Cellulose 35°SR | 4 | 4 | 4 | 4 | | |
| Charge inerte de CaCO$_3$ | 13 | 13 | 13 | 13 | | |
| Silice amorphe | 2 | 2 | 2 | 2 | | |
| Ciment | 79 | 79 | 79 | 79 | | |
| Total (kg) | 100 | 100 | 100 | 100 | | |

(*) Fibre de PP conforme à l'invention.

**Revendications**

1. Produit manufacturé façonné solide fabriqué au moyen d'une composition à prise hydraulique comprenant de l'eau, des liants hydrauliques et des fibres de renforcement, et, en outre, des fibres de mise en oeuvre en une quantité de 0 à 10% en poids par rapport au mélange sec total, et des fillers en une quantité de 0 à 50% en poids par rapport au mélange sec total, caractérisé en ce que les fibres de

EP 0 537 129 B1

renforcement comprennent 0,1 à 5% en poids par rapport au mélange sec total de fibres de polypropylène hautement cristallin ayant une résistance à la rupture à l'état de fibres de plus de 490 N par mm$^2$ et Q < 5 et 97 < HI < 100 et 94 < IPF < 100, Q étant le rapport du poids moléculaire moyen en masse au poids moléculaire moyen en nombre, HI étant la teneur en constituants insolubles dans le n-heptane à l'ébullition en % en poids et IPF étant la fraction de pentades isotactiques en moles %, les fibres ayant contenu initialement 0,05 à 10 % en poids d'un agent hydrophilisant qui a été rendu pratiquement insoluble à la surface des fibres par réaction avec des ions calcium.

2. Produit manufacturé suivant la revendication 1, caractérisé en ce que les fibres de renforcement comprennent de 0,3 à 4% en poids par rapport au mélange sec total, de polypropylène hautement cristallin.

3. Produit manufacturé suivant l'une quelconque des revendications précédentes, caractérisé en ce que les fibres de polypropylène ont une résistance à la rupture à l'état de fibres de 740 N par mm$^2$ ou davantage et Q ≤ 4,5, HI ≥ 98 et IPF ≥ 96.

4. Produit manufacturé suivant l'une quelconque des revendications précédentes, caractérisé en ce que le denier (d) des fibres de polypropylène se situe dans l'intervalle 0,5 < d < 20.

5. Produit manufacturé suivant l'une quelconque des revendications précédentes, caractérisé en ce que la longueur des fibres de polypropylène se situe dans l'intervalle de 2 à 15 mm.

6. Produit manufacturé suivant l'une quelconque des revendications précédentes, caractérisé en ce que la longueur des fibres de polypropylène se situe dans l'intervalle de 5 à 10 mm.

7. Produit manufacturé suivant l'une quelconque des revendications précédentes, caractérisé en ce que la section des fibres de polypropylène est circulaire.

8. Produit manufacturé suivant l'une quelconque des revendications 1 à 6, caractérisé en ce que les fibres de polypropylène ont une section irrégulière sensiblement en forme de X.

9. Produit manufacturé suivant l'une quelconque des revendications 1 à 6, caractérisé en ce que les fibres de polypropylène ont une section irrégulière sensiblement en forme de Y.

10. Produit manufacturé suivant l'une quelconque des revendications précédentes, caractérisé en ce que les fibres de polypropylène sont crêpées.

11. Produit manufacturé suivant l'une quelconque des revendications précédentes, caractérisé en ce que les fibres de polypropylène comprennent des charges.

12. Produit manufacturé suivant l'une quelconque des revendications précédentes, caractérisé en ce que les fibres de renforcement comprennent des fibres organiques synthétiques autres que les fibres de polypropylène.

13. Produit manufacturé suivant l'une quelconque des revendications précédentes, caractérisé en ce que les fibres de renforcement comprennent de plus des fibres inorganiques.

14. Produit manufacturé suivant l'une quelconque des revendications précédentes, caractérisé en ce que l'agent d'hydrophilisation est un sel de métal alcalin d'alcoylphosphate comportant de 8 à 18 atomes de carbone.

15. Produit manufacturé suivant la revendication 14, caractérisé en ce que le sel de métal alcalin est choisi dans le groupe comportant le sel de sodium et le sel de potassium.

## Claims

1. Shaped solid article manufactured with a hydraulically setting composition comprising water, hydraulic binders and reinforcing fibres and moreover process fibres in an amount of 0-10 wt% with respect to the total dry mix and fillers in an amount of 0-50 wt% with respect to the total dry mix, characterized in that the reinforcing fibres comprise from 0.1-5 wt% with respect to the total dry mix of highly crystalline polypropylene fibres possessing a fibre breakage strength of over 490 $N/mm^2$, and having Q < 5 and 97 < HI < 100, and 94 < IPF < 100, Q being the ratio of weight-average molecular weight to number-average molecular weight, HI being the boiling n-heptane insoluble content in wt% and IPF being the isotactic pentad fraction in mol%, the fibres having contained initially from 0.05 to 10 wt% of a hydrophilizing agent which has been made practically insoluble on the fibre surface by reacting with calcium ions.

2. Article according to claim 1, characterized in that the reinforcing fibres comprise from 0.3 to 4 wt% with respect to the total dry mix of highly crystalline polypropylene fibres.

3. Article according to anyone of the preceding claims, characterized in that the polypropylene fibres possess a fibre breakage strength of 740 $N/mm^2$ or more and have Q $\leq$ 4.5, HI $\leq$ 98 and IPF $\leq$ 96.

4. Article according to anyone of the preceding claims, characterized in that the denier (d) of the polypropylene fibres is in the range of 0.5 < d < 20.

5. Article according to anyone of the preceding claims, characterized in that the polypropylene fibre length ranges from 2 to 15 mm.

6. Article according to anyone of the preceding claims, characterized in that the polypropylene fibre length ranges between 5 and 10 mm.

7. Article according to anyone of the preceding claims, characterized in that the polypropylene fibre section is circular.

8. Article according to anyone of claims 1 to 6, characterized in that the polypropylene fibres have an irregular, substantially X-shaped cross-section.

9. Article according to anyone of claims 1 to 6, characterized in that the polypropylene fibres have an irregular, substantially Y-shaped cross-section.

10. Article according to anyone of the preceding claims, characterized in that the polypropylene fibres are crimped.

11. Article according to anyone of the preceding claims, characterized in that the polypropylene fibres comprise fillers.

12. Article according to anyone of the preceding claims, characterized in that the reinforcing fibres comprise synthetic organic fibres other than polypropylene fibres.

13. Article according to anyone of the preceding claims, characterized in that the reinforcing fibres further comprise inorganic fibres.

14. Article according to anyone of the preceding claims, characterized in that the hydrophilizing agent is an alkyl phosphate alkali metal salt, with 8 to 18 carbon atoms.

15. Article according to claim 14, characterized in that the alkali metal salt is chosen within the group comprising sodium salt and potassium salt.

**Patentansprüche**

1. Fester Formkörper, erzeugt mittels einer hydraulisch abbindenden Zusammensetzung, welche Wasser, hydraulische Bindemittel und Verstärkungsfasern und außerdem Veredelungsfasern in einer Menge von 0 bis 10 Gew.%, bezogen auf die Gesamttrockenmischung, und Füllstoffe in einer Menge von 0 bis 50 Gew.%, bezogen auf die Gesamttrockenmischung, umfaßt, dadurch gekennzeichnet, daß die Verstärkungsfasern, bezogen auf die Gesamttrockenmischung, 0,1 bis 5 Gew.% Fasern aus hochkristallinem Polypropylen mit einer Reißfestigkeit im Faserzustand von mehr als 490 N pro mm$^2$ und Q < 5 und 97 < HI < 100 und 94 < IPF < 100 umfassen, wobei Q das Verhältnis des Gewichtsmittels des Molekulargewichts zum Zahlenmittel des Molekulargewichts, HI der Gehalt an in n-Heptan bei Siedetemperatur unlöslichen Bestandteilen in Gew.% und IPF der Anteil an isotaktischen Pentaden in Mol% ist, wobei die Fasern anfänglich 0,05 bis 10 Gew.% eines Hydrophilisierungsmittels enthielten, welches durch Umsetzung mit Calciumionen an der Oberfläche der Fasern praktisch unlöslich gemacht wurde.

2. Formkörper nach Anspruch 1, dadurch gekennzeichnet, daß die Verstärkungsfasern 0,3 bis 4 Gew.% hochkristallines Polypropylen, bezogen auf die Gesamttrockenmischung, umfassen.

3. Formkörper nach einem der vorhergehenden Ansprüche, dadurch gekennzeichnet, daß die Polypropylenfasern eine Reißfestigkeit im Faserzustand von 740 N pro mm$^2$ oder mehr und Q ≤ 4,5, HI ≥ 98 und IPF ≥ 96 aufweisen.

4. Formkörper nach einem der vorhergehenden Ansprüche, dadurch gekennzeichnet, daß das Denier (d) der Polypropylenfasern in einem Bereich von 0,5 < d < 20 liegt.

5. Formkörper nach einem der vorhergehenden Ansprüche, dadurch gekennzeichnet daß die Länge der Polypropylenfasern in einem Bereich von 2 bis 15 mm liegt.

6. Formkörper nach einem der vorhergehenden Ansprüche, dadurch gekennzeichnet, daß die Länge der Polypropylenfasern in einem Bereich von 5 bis 10 mm liegt.

7. Formkörper nach einem der vorhergehenden Ansprüche, dadurch gekennzeichnet, daß der Querschnitt der Polypropylenfasern kreisförmig ist.

8. Formkörper nach einem der Ansprüche 1 bis 6, dadurch gekennzeichnet, daß die Polypropylenfasern einen unregelmäßigen Querschnitt in im wesentlichen X-Form haben.

9. Formkörper nach einem der Ansprüche 1 bis 6, dadurch gekennzeichnet, daß die Polypropylenfasern einen unregelmäßigen Querschnitt in im wesentlichen Y-Form haben.

10. Formkörper nach einem der vorhergehenden Ansprüche, dadurch gekennzeichnet, daß die Polypropylenfasern gekräuselt sind.

11. Formkörper nach einem der vorhergehenden Ansprüche, dadurch gekennzeichnet, daß die Polypropylenfasern Füllstoffe enthalten.

12. Formkörper nach einem der vorhergehenden Ansprüche, dadurch gekennzeichnet, daß die Verstärkungsfasern andere organische Kunststofffasern als Polypropylenfasern umfassen.

13. Formkörper nach einem der vorhergehenden Ansprüche, dadurch gekennzeichnet, daß die Verstärkungsfasern weiters anorganische Fasern umfassen.

14. Formkörper nach einem der vorhergehenden Ansprüche, dadurch gekennzeichnet, daß das Hydrophilisierungsmittel ein Alkylphosphat-Alkalimetallsalz mit 8 bis 18 Kohlenstoffatomen ist.

15. Formkörper nach Anspruch 14, dadurch gekennzeichnet, daß das Alkalimetallsalz ausgewählt ist aus der Gruppe umfassend das Natriumsalz und das Kaliumsalz.